# EUROPEAN PATENT APPLICATION

(11) **EP 4 845 167 A1**
(43) Date of publication of application: **25.11.2026**
(21) Application number: 25177950.0
(22) Date of filing: 21.05.2025
(51) Int. Cl.: H04N 23/50, H04N 23/51, H04N 23/57, G03B 17/02, G03B 17/08

(54) **PREPARING AN AUTOMOTIVE CAMERA FOR ASSEMBLING THE AUTOMOTIVE CAMERA**

(71) Applicant: Connaught Electronics Ltd., County Galway H54 Y276 (IE)
(72) Inventor: LASCANO, Eugene, Tuam, H54 Y276 (IE); TADLE, Richard, Tuam, H54 Y276 (IE); GAFFNEY, David, Tuam, H54 Y276 (IE); KENNEDY, Ronan, Tuam, H54 Y276 (IE)
(74) Representative: Jauregui Urbahn, Kristian

(57) **Abstract**

A method for preparing an automotive camera for assembling the automotive camera is provided. The method comprises extruding the first housing part from a raw material, wherein the first housing part comprises at least one pin for connecting a circuit board to the first housing part. The method furthermore comprises applying a protective coating to a part of an inner surface of the first housing part, wherein the part of the inner surface comprises at least one mounting area and/or a surface or a surface part of the at least one pin. Subsequently the method comprises removing the protective coating from the at least one mounting area and/or from the surface or the surface part of the at least one pin for assembling component second housing part of the automotive camera at the at least one mounting area and/or the circuit board to the surface or the surface part of the at least one pin.

## Description

The present invention is directed to a method for preparing an automotive camera for assembling the automotive camera. Furthermore, the invention is directed to an automotive camera, which has been prepared according to this method and a camera system including the automotive camera. Furthermore, the invention is directed to an electronic vehicle guidance system including the automotive camera or the camera system, respectively.

Cameras, which are designed to be arranged on motor vehicles, may be denoted as automotive cameras. Automotive cameras depicting an exterior environment of the motor vehicle are used for various driver assistance functions or other functions for partially or fully automatic driving of a motor vehicle. However, automotive cameras may also be employed for the capturing an interior of the vehicle and may be arranged correspondingly. Thus, automotive cameras may be exposed to significant temperature fluctuations and/or other environmental conditions. Moreover, automotive cameras are also exposed to mechanical stress due to the vibrations while the vehicle is moving. Automotive cameras for motor vehicles should therefore be designed to operate as desired under said conditions and to achieve sufficiently good image quality. The images may then be provided to driver assistance systems or other electronic vehicle guidance systems, which may use them as an input for driver assistance or at least partly automatically guiding the vehicle.

A first housing part of the automotive camera may be exposed to environmental influences such as humidity, salt, dirt, temperature fluctuations and others. In order to protect the automotive camera from corrosion or other mechanical damage, it may be advantageously to coat the first housing part. This protective coating may also be beneficial for changing the reflection properties of the first housing part, for example to improve the image quality by avoiding such reflections.

On the other hand, the protective coating may also be disadvantageous on specific areas of the first housing part. For example, a manufacturing process of the automotive camera may include assembling further components with the first housing part using at least one mounting area of the first housing part. Such assembling may require joining technologies, which are not compatible with the protective coating or the protective coating may decrease the stability of the resulting part or the connection or the automotive camera.

In order to omit the protective coating from being applied to the at least one mounting area, the at least one mounting area may for example be covered with a stencil during the coating process. This will increase the effort of the coating process, for example as the stencil has to follow a shape of the first housing part. Furthermore, if the first housing part has a complex geometrical shape, it might be difficult or not even possible to apply the stencil reliably.

It is an objective of the present invention to optimize the assembly of an automotive camera.

This objective is achieved by the respective subject matter of the independent claims. Further implementations and preferred embodiments are subject matter of the dependent claims.

The invention is based on the idea to apply a protective coating to a part of an inner surface of a first housing part, wherein the part of the inner surface includes at least one mounting area. Afterwards the method includes removing the protective coating from the at least one mounting area.

According to an aspect of the invention, a method for preparing an automotive camera for assembling the automotive camera is provided. The method comprises extruding a first housing part from a raw material, wherein the first housing part comprises at least one pin for connecting a circuit board to the first housing part. Furthermore the method comprises applying a protective coating to a part of an inner surface of the first housing part, wherein the part of the inner surface comprises at least one mounting area and/or a surface or a surface part of the at least one pin. Subsequently the method comprises removing the protective coating from the at least one mounting area for assembling a second housing part of the automotive camera at the at least one mounting area and/or removing the protective coating from the surface or the surface part of the at least one pin for assembling the circuit board to the surface or the surface part of the at least one pin.

The raw material may comprise or consists of aluminum or an aluminum alloy.

The circuit board may be designed and prepared to generate an image for example by an imager chip mounted on the circuit board. The circuit board may also comprise a connector for connecting the circuit board to an external electronic circuit, for example an electronic control unit (ECU) of the motor vehicle.

The circuit board may comprise at least one receiving portion, such as at least one hole or at least one notch or at least one indentation, each of which is designed to fit the at least one pin, such that the at least one pin can be inserted in the respective at least one receiving portion. In particular the at least one pin may pass through the circuit board.

The at least one pin may be used to connect and/or to align the circuit board with the first housing part. For example the imager chip may have to be positioned at a specific position, so that incident light may hit the imager chip a predefined position and/or a predefined angle.

The at least one pin may for example have a cylindrical or essentially cylindrical shape. The surface or the surface part of the at least one pin may be a lateral area of the at least one pin or an area of a top base of the at least one pin.

The protective coating may protect the first housing part from corrosion or from other mechanical stress, which the first housing part is exposed to in an intended use of the automotive camera. The protective coating may also avoid unwanted reflections for example reflections, which may occur in an area of the first housing part, where incident light approaches an imager chip. The imager chip may be located in an interior space of the automotive camera, which may be formed by a combination of the first housing part and the second housing part. The first housing part may for example guide the incident light towards the imager chip. On the other hand the protective coating may also be applied for aesthetic reasons.

The protective coating may for example comprise or consist of an electrically non-conductive material deposited to or generated on the part of the inner surface of the first housing part. The non-conductive material may for example be an oxide layer, for example aluminum oxide, in particular in case the first housing part comprises or consists of aluminum or an aluminum alloy.

The protective coating may for example be generated by an electrolytic passivation process. The electrolytic passivation process may increase a thickness of a natural oxide layer on the part of the inner surface of the first housing part.

The protective coating may for example be applied to the first housing by a spray coating method, an immersion process, a painting process and/or an anodization method. A result of the protective coating may for example be a change of the part of the inner surface of the first housing part. The part of the inner surface may have a different color, different reflection properties and/or different electrical and/or thermal conductivity. The protective coating may also change a first dimension of the first housing part, which is a dimension before the protective coating. The change may result in a second dimension after the protective coating. The second dimension may be larger than the first dimension, in other words the dimension may increase or slightly increase depending on an applied coating layer thickness of the protective coating.

The part of the inner surface of the first housing part may by a majority of the inner surface. For example, the part of the inner surface may be more than 50% of the inner surface, in particular more than 80% or more than 95%. In some implementations, the part of the inner surface is identical with a total inner surface of the first housing part. A further part of the inner surface, on which the protective coating is not applied, may for example be beneficial for holding or for gripping the first housing part during the coating process. The further part of the inner surface may also not be accessible for the coating process.

The at least one mounting area may be designed and, in particular, optimized for assembling the first housing part to the second housing part of the automotive camera. For such assembly, the second housing part may comprise at least one further mounting area, which fits to one or more of the at least one mounting area. In particular, the at least one mounting area may be smaller than the part of the inner surface that has been coated with the protective coating, for example, the at least one mounting area may for example be a minor area of the part of the inner surface.

It may be possible to assemble the second housing part to more than one of the at least one mounting area. The at least one mounting area may, in particular, be distributed along the part of the inner surface, wherein a first mounting area of the at least one mounting area may for example not be connected to a second mounting area of the at least one mounting area. In particular, each individual mounting area of the at least one mounting area is a connected area.

The removing of the protective coating from the at least one mounting area may comprise completely removing the protective coating from each of the at least one mounting area. The removing may remove the protective coating and simultaneously a thin layer of a material of the first housing part at the at least one mounting area. The removing of the thin layer of the material may be considered in a design of the first housing part, such that the second housing part fits exactly to the first housing part after the removing. In other words, the first dimension before the removing of the protective coating may be larger than the final dimension, which is a dimension after the removing. In particular, after removing the protective coating from the at least one mounting area, the protective coating remains present in the remaining part of the surface that has been coated by the protective coating except the at least one mounting area.

Resulting advantages include the fact that the process of preparing automotive camera is optimized as the protective coating may be applied to a larger area of the first housing part in a first step and removed from the least one mounting area in a second step. Thus, the coating process may be faster and easier to start without a usage of a stencil or other omitting or masking technologies. The protective coating may also be applied in a more uniform way, in particular in a more uniform thickness of the protective coating. Additionally a design change of the automotive camera and/or a modification of the first housing part or of the second housing part may not have an influence on the protective coating process. This may also reduce tooling cost and/or reduce the time required for the protective coating process.

An additional advantage of the described implementations is that the automotive camera is prepared to generate the image by the circuit board and to provide the image to the external electronic circuit. Furthermore, the first housing part and the circuit board are in stable and robust contact and the design is optimized for a manufacturing process.

According to several implementations, the first housing part comprises or consists of an extruded part and/or a pressure formed part and/or a push-pull formed part.

The extruded part may for example be a result of an extrusion process, for example a hot extrusion process, a cold extrusion process, a warm extrusion process or a friction extrusion process. The pressure-formed part may for example be a result of a drop-forging process, a swaging process or a stamping process. The push-pull formed part may for example be a result of a punch drawing process, a deep drawing process or a thermoforming process.

An advantage of the described implementations is the fast and easy manufacturing of the first housing part. Especially for medium and large production quantities the described processes may allow a reduction of cost of the automotive camera. Furthermore, the described process offer a minimum risk of a porosity or a void inside or on the surface of the first housing part. In comparison die casting involves a high risk of such porosity or void, as a material of the first housing part needs to be melted and is then in a liquid state injected into a mold with high pressure. The porosity or the void may have a negative consequence on the automotive camera, such as a penetration of humidity inside the automotive camera or a reduced stability of the automotive camera or the mounting of the automotive camera to its counterpart.

According to several implementations, the method may comprise manufacturing the first housing part for example by one of the previously described processes.

According to several implementations, the first housing part comprises or consists of aluminum or an aluminum alloy.

In particular, in such embodiments the first housing part may be produced or reworked particularly well with a machining process like a milling process, a CNC machining process, a grinding process or a lathe process.

An advantage of the described implementations is that the automotive camera is protected by a particularly robust housing and the aluminum or aluminum alloy can reproducibly be produced or reworked with a low tolerance.

According to several implementations, applying the protective coating includes applying the protective coating completely to the inner surface of the first housing part.

In other words, the part of the inner surface may be identical with the inner surface of the first housing part.

An advantage of the described implementations is, that the protective coating process can be simplified as no area needs to be considered, which should be masked during the protective coating process. This may result in an even layer of protective coating and in faster application time.

According to several implementations, the protective coating is applied by an anodization coating process.

The anodization coating process may be an electrolytic passivation process used to increase a thickness of a natural oxide layer on the part of the inner surface of the first housing part. In particular, the anodization coating process may protect the part of the inner surface from corrosion, but may also be applied in order to change an appearance of the first housing part, for example to change a color of the part of the inner surface.

An advantage of the described implementations is that the anodization coating process protects the first housing part and thus the automotive camera from corrosion and also improve the appearance from an aesthetic point of view.

According to several implementations, removing the protective coating from the at least one mounting area and/or from the surface or the surface part of the at least one pin includes a milling process and/or a grinding process and/or a machining process.

In particular removing the protective coating from each of the at least one mounting area and/or the surface or the surface part of the at least one pin may involve one or more of the described processes. On the other hand also all of the at least one mounting areas and/or the surface or the surface part of the at least one pin may be treated identically, such that a same process may be applied to the at least one mounting area and/or to the surface or the surface part of the at least one pin. A selection of a process may depend on a shape or dimension of the at least one mounting area and/or a dimension of the surface or the surface part of the at least one pin and/or on a shape or a dimension of the first housing part. The selection of the process may also depend on a type of the protective coating or on a material of the first housing part.

In particular the milling process and/or the grinding process and/or the machining process may be CNC controlled.

Removing the protective coating by the milling process and/or the grinding process and/or the machining process may for example also include removing the thin layer of the material of the first housing part underneath the protective coating. For this reason the first housing part may have been designed and manufactured with an oversize and may be machined to the final dimension by the removing of the protective coating.

An advantage of the described implementations is that the removing the protective coating is flexible and adaptable to the first housing part and may be varied according to specific requirements. Furthermore, the process of removing the protective coating may simultaneously be used for reworking the first housing part at a further area, for example for generating a surface structure or an adaption of a further dimension. Thus, the removing of the protective coating may generate synergies with other processes.

According to several implementations, removing the protective coating from the surface or the surface part of the at least one pin comprises reducing a respective diameter of the at least one pin to a predefined target diameter.

In particular the at least one pin may be designed and manufactured in an oversize by one of the extrusion processes and the predefined target diameter may be achieved by a subsequent machining of the at least one pin and as such reducing the respective diameter of the at least one pin.

An advantage of the described solutions is that the removing of the protective coating may be combined with an additional process of adapting the diameter of the at least one pin to the predefined target diameter as this may generate synergies.

According to several implementations, the method comprises assembling the second housing part to the first housing part, wherein the second housing part is connected to the first housing part, such that each of the at least one mounting area of the first housing part is in direct contact with at least one further mounting area of the second housing part.

In other words, each of the at least one mounting area of the first housing part may have been designed and manufactured to fit the second housing part. For example, the at least one mounting area and the at least one further mounting area are connected by a joint, which is for example a result of a welding process and/or of a laser welding process and/or of a soldering process and/or of a clamping process and/or of a pressed-fit process and/or of a screwing process. For example, the connection may be thermally and/or electrically conducting if the first housing part and the second housing part comprises aluminum and/or the aluminum alloy and/or steel and/or a steel alloy. For example the connection may be permanent and/or non-detachable.

An advantage of the described implementations is a further increased protection against environmental influences. Further, the junction may have enhanced properties for dissipate heat or for conducting an electric current.

According to several implementations, the second housing part is assembled to the first housing part by using a welding process and/or a laser welding process.

In other words, the at least one mounting area of the first housing part may be assembled to the at least one further mounting area of the second housing part by the welding process and/or by the laser welding process.

The combination of the first housing part and the second housing part may be a predominant part of the total housing of the automotive camera.

The welding process and/or the laser welding process may be applied to the at least one mounting area.

An advantage of the described implementations is a stable and robust connection of the first housing part to the second housing part.

According to several implementations, the method may comprise extruding the second housing part and applying a further protective coating to a part of an inner surface of the second housing part, wherein the part of the inner surface comprises the at least one further mounting area. Subsequently the method comprises removing the further protective coating from the at least one further mounting area for assembling the first housing part of the automotive camera at the at least one further mounting area.

The explanations above and in the following regarding the first housing part, the protective coating, applying the protective coating to the part of the inner surface of the first housing part, and removing the protective coating from the at least one mounting area carry over analogously to the second housing part, the further protective coating, applying the further protective coating to the part of the inner surface of the second housing part, and removing the further protective coating from the at least one further mounting area, respectively.

According to several implementations, the method comprises assembling the circuit board to the first housing part, wherein the circuit board is connected to the first housing part, such that the surface or the surface part of the at least one pin is in direct contact with a mounting area of the circuit board.

In other words, the circuit board may have been designed and manufactured to fit the at least one pin. For example, the circuit board and the at least one pin are connected by a joint, which is for example a result of a soldering process and/or of a clamping process and/or of a pressed-fit process and/or of a screwing process. For example, the connection may be thermally and/or electrically conducting. For example the connection may be permanent and/or non-detachable.

An advantage of the described implementations is a thermal and electric conductivity, which may result in a larger temperature range for using the automotive camera.

According to several implementations, the method comprises depositing an electrically conductive material on the surface or on the surface part of the at least one pin after the protective coating has been removed from the surface or the surface part of the at least one pin for preparing the at least one pin for connecting with the circuit board. Furthermore, the circuit board is assembled to the first housing part by using a soldering process at the surface or the surface part of the at least one pin.

The depositing of the electrically conductive material may comprise a plating, in particular by a zincate process and/or a Bondal process and/or an Alstan process if the material of the first housing part is aluminum and/or an aluminum alloy. An intention of the plating may be a possibility for soldering the at least one pin by the soldering process and a protection against oxidization of the surface of the at least one pin.

The zincate process may for example comprise applying a zinc immersion deposit to the aluminum or to the aluminum alloy followed by an electrolytic copper strike.

The Bondal and Alstan processes built upon the zincate process to improve an overall bond. The Bondal process may for example be a proprietary zincate process in which a quad metal zincate (zinc/copper/nickel/iron) is used to bond to the aluminum or the aluminum alloy. The process may form a tight zincate receptive to subsequent plating. The Alstan may for example be a proprietary process in which a stannate activation is used in lieu of a zincate step. The stannate activation may apply a thin layer of an immersion tin on the surface of the at least one pin, which may subsequently be plated over with a bronze (tin/copper) alloy deposit. A part of the immersion tin from the stannate activation step may be incorporated into the bronze alloy deposit thereby promoting adhesion.

An advantage of the described implementations is an improved stability of the connection from the circuit board to the first housing part by the soldering process. Especially if the at least one pin is at least one aluminum pin, the plating may be essential for an electric and mechanical contact from the circuit board to the first housing part. Furthermore, the surface of the at least one pin may be protected against oxidization.

According to several implementations, the method comprises connecting a lens unit, in particular a lens unit of the automotive camera, to the first housing part. Furthermore, the assembling of the circuit board to the first housing part comprises aligning the circuit board with respect to the first housing part and/or with respect to the lens unit.

The first housing part may comprise a lens opening and the lens unit may be connected to the lens opening or to the first housing part at the lens opening. The lens opening may be designed such that incident light can penetrate the lens unit and the lens opening and hit the imager chip on the circuit board. A light sensitive area of the imager chip may be perpendicular to an optical axis of the lens unit.

The lens unit may comprise at least one optical lens defining the optical axis. The circuit board and thus for example the imager chip may be aligned so that a surface of the imager chip is perpendicular to the optical axis and that a position of the imager chip in relation to the at least one optical lens is identical to a predefined position, for example the optical axis may pierce a center of the surface of the imager chip. The aligning may optimize a resulting image.

An advantage of the described implementations is that an image quality of the resulting image may be increased with precise alignment of the circuit board with respect to the first housing part and/or with respect to the lens unit.

In several implementations, the first housing part consists of a single piece component and the at least one pin is a protruding part of the first housing part.

In other words, the at least one pin may be produced as an essential structure of the first housing part during a manufacturing process of the first housing part. For example if the first housing part is identical to the extruded part, the at least one pin may be a result of one of the described extrusion processes.

In particular the at least one pin may be designed and manufactured in an oversize by one of the extrusion processes and a final dimension of the at least one pin may be achieved by a subsequent machining of the at least one pin.

An advantage of the described implementations is, that a tolerance of a position of the at least one pin may be improved by an integrated production of the first housing part including the at least one pin compared to an installation of the at least one pin in a production step after a manufacturing of a base of the first housing part. Furthermore, less parts are necessary and a quality assurance for checking a presence of the at least one pin may be omitted. Additionally the single piece component offers a homogeneous material, thus the at least one pin and the base of the first housing part may not have a different coefficient of thermal expansion (CTE). This may lead to less mechanical stress over a lifetime of the automotive camera.

According to a further aspect of the invention, an automotive camera, which has been prepared according to a described method is provided.

According to a further aspect of the invention, a camera system for a motor vehicle is provided. The camera system comprises an implementation of an automotive camera according to the invention. The automotive camera comprises a circuit board and the camera system comprises an external electronic circuit, wherein the external electronic circuit is connected to the circuit board.

The external electronic circuit may be located outside the automotive camera, in particular outside of a housing formed at least by the first housing part and the second housing part. The external electronic circuit may receive raw image data from the automotive camera, for example from the circuit board, in particular from the imager chip. The external electronic circuit may then generate an image based on the raw image data and, optionally, may further process and/or use the image. Alternatively, the imager chip and/or another electronic component of the automotive camera, in particular the circuit board, may pre-process or process the raw image data. The external electronic circuit may then generate the image based on the pre-processed or processed raw image data and, optionally, may further process and/or use the image. Alternatively, the imager chip and/or another electronic component of the automotive camera, in particular the circuit board, may generate the image based on the raw image data. The external electronic circuit may then further process and/or use the image.

The external electronic circuit may for example be an electronic control unit (ECU).

According to a further aspect of the invention, an electronic vehicle guidance system comprising an automotive camera according to the invention or a camera system according to the invention is provided.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated April 2021.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

The at least one control signal may for example be provided to one or more actuators of the vehicle, including for example one or more braking actuators and/or one or more steering actuators and/or one or more propulsion motors of the vehicle. The one or more actuators may affect a longitudinal and/or lateral control of the vehicle in order to guide the vehicle at least in part automatically based on the at least one control signal.

The assistance information may be output by means of an output device of the vehicle, for example a display and/or an audio output system and/or a haptic output system.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures:
- Fig. 1: shows schematically a perspective view of a first housing part of an exemplary implementation of an automotive camera according to the invention;
- Fig. 2: shows schematically an exploded side view of a further exemplary implementation of an automotive camera according to the invention;
- Fig. 3: shows schematically an perspective view of a further exemplary implementation of an automotive camera according to the invention;
- Fig. 4: shows schematically a part of a cross-section through a further exemplary implementation of an automotive camera according to the invention;
- Fig. 5: shows schematically an exploded side view of a further exemplary implementation of an automotive camera according to the invention;
- Fig. 6: shows a flow chart of an exemplary implementation of a method for preparing an automotive camera according to the invention; and
- Fig. 7: shows schematically a motor vehicle with an exemplary implementation of an electronic vehicle guidance system according to the invention.

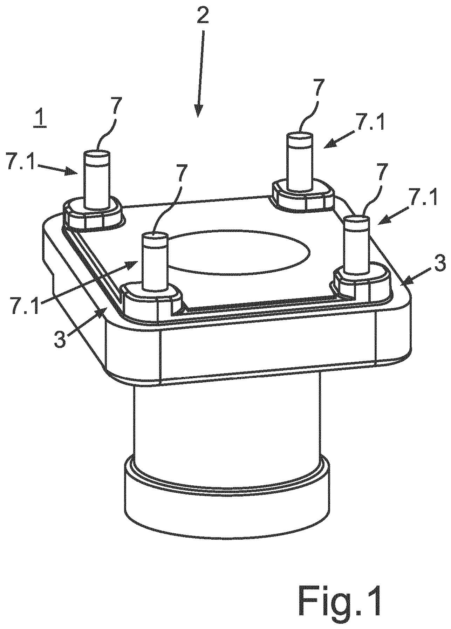

In Fig. 1, a first housing part 1 of an automotive camera 6 according to the invention is shown. The first housing part 1 is provided and a protective coating is applied to a part of an inner surface 2 of the first housing part 1, wherein the part of the inner surface 2 comprises at least one mounting area 3. The protective coating is removed from the at least one mounting area 3 for assembling a second housing part 4 of the automotive camera 6 at the at least one mounting area 3 and/or a circuit board 5 to a surface 7.1 or a surface part of at least one pin 7. The automotive camera 6 1 is, in particular, prepared according to an exemplary implementation of a method for preparing according to the invention.

The first housing part 1 may for example comprise or consist of an extruded part and/or a pressure formed part and/or a push-pull formed part.

The first housing part 1 may for example comprise a lens unit 9. Alternatively the lens unit 9 may be a separate part and the first housing part 1 may comprise a flange for connecting the lens unit 9.

The at least one mounting area 3 may for example comprise an outer edge of the first housing part 1. The outer edge may comprise a step designed to fit at least one further mounting area of the second housing part 4. The first housing part 1 may comprise the at least one pin 7 and the at least one mounting area 3 may comprise a surface of the at least one pin 7.

The protective coating may be applied to a total inner surface of the first housing part 1. In particular the protective coating may be applied to a lens opening of the first housing part 1 and the lens opening is prepared for a penetration of incident light.

The protective coating may be generated by an anodization coating process. The anodization coating process may apply the protective coating, which protects the first housing part 1 from corrosion, avoid unwanted reflections and/or may improve an aesthetic appearance of the automotive camera 6.

The protective coating may be removed from the at least one mounting area 3 by a milling process and/or a grinding process and/or a machining process. A selection of a process may depend on a material of the first housing part 1, a shape of the first housing part 1, a thickness of the protective coating and a material of the protective coating.

In at least one implementation the automotive camera 6 comprises the circuit board 5 and the first housing part 1 comprises the at least one pin 7 for assembling the circuit board 5 to the first housing part 1. In the shown example in Fig. 1, the first housing part 1 comprises four pins 7. There may be other implementations, wherein the first housing part 1 comprises three pins 7 or another number of the at least one pin 7.

The first housing part 1 may be a single piece component and in particular the at least one pin 7 may be part of the first housing part 1 as an integrated part. If the first housing part 1 may be the extruded part and/or the pressure formed part and/or the push-pulled formed part, the at least one pin 7 may be produced in an initial production step of the first housing part. The at least one pin 7 may be designed and produced in an oversize in the initial production step and may be machined to a final dimension in a subsequent production step in order to fit the circuit board 5.

Other features of the first housing part 1 such as barrel bore diameter, holes and/or excess material may also be machined in the subsequent process.

The at least one mounting area 3 may comprise a surface of the at least one pin 7. The protective coating may be removed from the surface of the at least one pin 7 for preparing the at least one pin 7 for assembling the circuit board 5 to the first housing part 1 with the at least one pin 7. Prior to assembling the at least one pin 7 to the circuit board 5, the surface of the at least one pin 7 may be plated, in particular with a zincate process, a Bondal process and/or an Alstan process. The at least one plated pin 7 may be soldered to the circuit board 5.

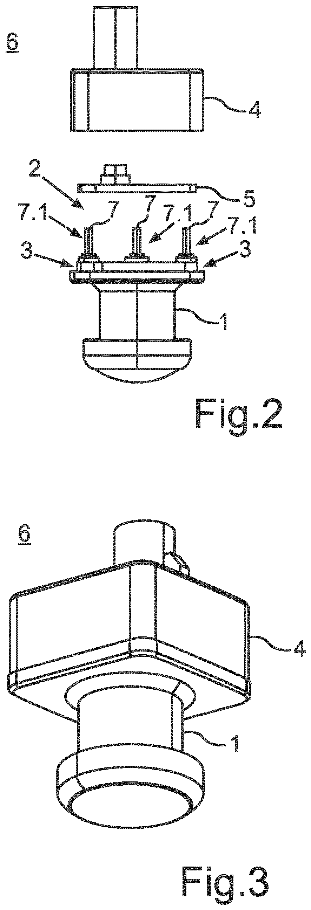

Fig. 2 shows an exploded view of the automotive camera 6. The circuit board 5 may be assembled to the first housing part 1 with the at least one pin 7. In this example the first housing part 1 comprises three pins 7, wherein a middle pin 7 is be recessed in terms of a position on the first housing part 1 in comparison to a left pin 7 and to a right pin 7.

The second housing part 4 may be assembled to the first housing part 1. In the shown example, the circuit board 5 may be enclosed by a combination of the first housing part 1 and the second housing part 4.

Fig. 3 shows a perspective view of the automotive camera 6 according to the invention. The first housing part 1 and the second housing part 4 are assembled. The assembling of the first housing part 1 and the second housing part 4 may be done by a welding and/or a laser welding process. Such a welding or laser welding process may protect the automotive camera 6 from environmental influence, such as from water and dust, as well as from mechanical stress.

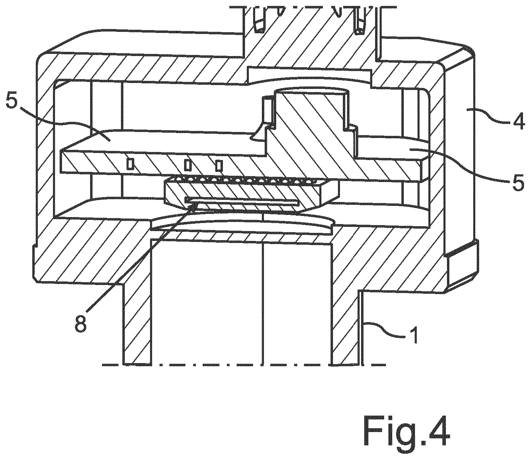

Fig. 4 shows a partial cross-section of the automotive camera 6. The circuit board 5 may comprise an imager chip 8, which may be placed perpendicular to the lens opening of the first housing part 1. The circuit board 5 may be assembled to the first housing part 1 by the at least one pin 7. As a position of the imager chip 8 may be important for a resulting image, the circuit board 5 including the imager chip 8 may be aligned with respect to the first housing part 1 and the lens opening. After the alignment, the position of the circuit board 5 may be fixed to a permanent connection.

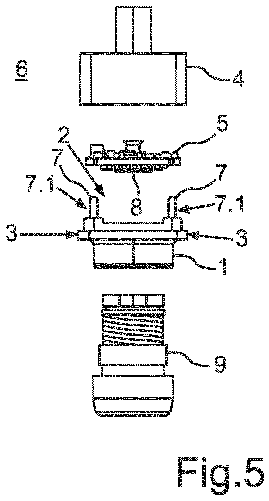

Fig. 5 shows an exploded view of a further implementation of the automotive camera 6. In this example, the automotive camera 6 comprises a lens unit 9, which may be connected to the first housing part 1, in particular to the lens opening of the first housing part 1. The part of the inner surface 2 of the first housing part 1 may comprise the lens opening, thus incident light may not be reflected before hitting the imager chip 8 depending on a type of the protective coating.

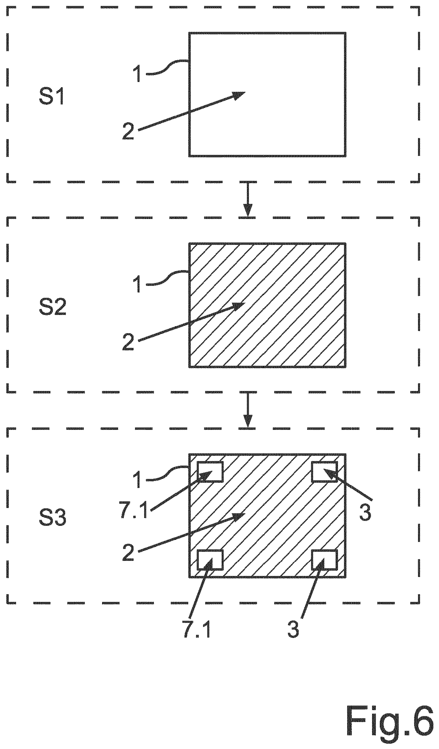

Fig. 6 shows an exemplary flow chart of the method for preparing the automotive camera 6. Firstly, the method comprises extruding S1 the first housing part 1 from a raw material, wherein the first housing part comprises the at least one pin 7 for connecting the circuit board 5 to the first housing part 1. Afterwards, the method comprises applying S2 the protective coating to the part of the inner surface 2 of the first housing part 1, wherein the part of the inner surface 1 comprises the at least one mounting area 3 and/or the surface 7.1 or the surface part of the at least one pin 7. Subsequently, the method comprises removing S3 the protective coating from the at least one mounting area 3 and/or from the surface 7.1 or the surface part of the at least one pin 7 for assembling the second housing part 4 of the automotive camera 6 at the at least one mounting area 3 and/or the circuit board 5 to the surface 7.1 or the surface part of the at least one pin 7.

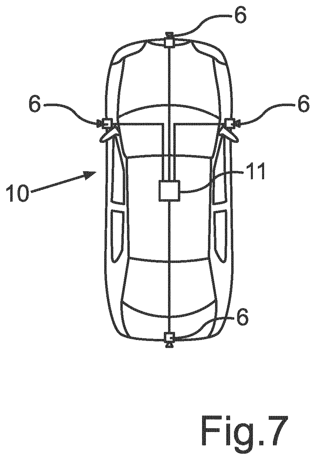

In Fig. 7, a motor vehicle 10 comprising at least one automotive camera 6, for example a front camera, side cameras and/or a rear camera, which is implemented according to an exemplary embodiment of the present invention is shown in a top view. Here, the motor vehicle 10 is formed as a passenger car. The motor vehicle 10 may for example comprise an electronic vehicle guidance system 11 to control the automotive cameras 6 and/or to receive camera images from them.

In the shown example, the motor vehicle 10 comprises four automotive cameras 6, which are distributed around the motor vehicle 10. One of the automotive cameras 6 is arranged in a rear area, one of the automotive cameras 6 is arranged in a front area of the motor vehicle 10 and the remaining two automotive cameras 6 are arranged in respective lateral areas, in particular in vicinities of the wing mirrors. The number and arrangement of the automotive cameras 6 may, however, be different in other examples. Alternatively or in addition, one or more automotive cameras 6 according to the invention may be arranged for capturing an interior space or a passenger compartment of the motor vehicle 10.

The automotive cameras 6 are, in particular, installed to a respective individual motor vehicle component. The motor vehicle component may for example be a bumper or an exterior mirror or a side trim. The motor vehicle component may also be a headliner or an interior trim or a cover of a steering wheel center or an interior mirror. The mentioned motor vehicle components are to be considered only as non-limiting examples.

## Claims

1. Method for preparing an automotive camera (6) for assembling the automotive camera (6), wherein the method comprises the following steps:
- Extruding a first housing part (1) from a raw material, wherein the first housing part comprises at least one pin (7) for connecting a circuit board (5) to the first housing part (1);
- applying a protective coating to a part of an inner surface (2) of the first housing part (1), wherein the part of the inner surface (2) comprises at least one mounting area (3) and/or a surface (7.1) or a surface part of the at least one pin (7); and
- removing the protective coating from the at least one mounting area (3) for assembling a second housing part (4) of the automotive camera (6) at the at least one mounting area (3) and/or removing the protective coating from the surface (7.1) or the surface part of the at least one pin (7) for assembling the circuit board (5) to the surface (7.1) or the surface part of the at least one pin (7).

2. Method according to claim 1, wherein the first housing part (1) comprises or consists of an extruded part and/or a pressure-formed part and/or a push-pull-formed part.

3. Method according to one of the preceding claims, wherein the first housing part (1) comprises or consists of aluminum or an aluminum alloy.

4. Method according to one of the preceding claims, wherein applying the protective coating includes applying the protective coating completely to the inner surface (2) of the first housing part (1).

5. Method according to one of the preceding claims, wherein the protective coating is applied by an anodization coating process.

6. Method according to one of the preceding claims, wherein removing the protective coating from the at least one mounting area (3) and/or from the surface (7.1) or the surface part of the at least one pin (7) includes a milling process and/or a grinding process and/or a machining process.

7. Method according to claim 6, wherein removing the protective coating from the surface (7.1) or the surface part of the at least one pin (7) comprises reducing a respective diameter of the at least one pin (7) to a predefined target diameter.

8. Method according to one of the preceding claims comprising assembling the second housing part (4) to the first housing part (1), wherein the second housing part (4) is connected to the first housing part (1), such that each of the at least one mounting area (3) of the first housing part (1) is in direct contact with at least one further mounting area of the second housing part (4).

9. Method according to claim 8, wherein the second housing part (4) is assembled to the first housing part (1) by using a welding process and/or a laser welding process.

10. Method according to one of the preceding claims comprising assembling the circuit board (5) to the first housing part (1), wherein the circuit board (5) is connected to the first housing part (1), such that the surface (7.1) or the surface part of the at least one pin (7) is in direct contact with a mounting area of the circuit board (5).

11. Method according to claim 10, wherein
- the method comprises depositing an electrically conductive material on the surface (7.1) or the surface part of the at least one pin (7) after the protective coating has been removed from the surface (7.1) or the surface part of the at least one pin (7); and
- the circuit board (5) is assembled to the first housing part (1) by using a soldering process at the surface (7.1) or the surface part of the at least one pin (7).

12. Method according to one of the claims 10 or 11, wherein
- the method comprises connecting a lens unit (9) to the first housing part (1) and
- the assembling of the circuit board (5) to the first housing part (1) comprises aligning the circuit board (5) with respect to the first housing part (1) and/or with respect to the lens unit (9).

13. Method according to one of the preceding claims, wherein
- the first housing part (1) consists of a single piece component and
- the at least one pin (7) is a protruding part of the first housing part (1).

14. Automotive camera (6), which has been prepared according to a method of one of the preceding claims.

15. Camera system for a motor vehicle (10), the camera system comprising an automotive camera (6) according to claim 14, the automotive camera (6) comprising a circuit board (5), and the camera system comprising an external electronic circuit, wherein the external electronic circuit is connected to the circuit board (5).

16. Electronic vehicle guidance system (11) comprising an automotive camera (6) according to claim 14 or a camera system according to claim 15.
